(19) Europäisches Patentamt
European Patent Office
Office européen des brevets

(11) **EP 3 084 546 B1**

(12) **EUROPÄISCHE PATENTSCHRIFT**

(45) Veröffentlichungstag und Bekanntmachung des Hinweises auf die Patenterteilung:
**08.05.2019** Patentblatt **2019/19**

(21) Anmeldenummer: **14821564.3**

(22) Anmeldetag: **15.12.2014**

(51) Int Cl.:
*G05D 16/10* (2006.01)    *B60N 2/50* (2006.01)
*B60N 2/52* (2006.01)    *B60N 2/64* (2006.01)
*B60N 2/66* (2006.01)    *B60N 2/16* (2006.01)
*B60N 2/90* (2018.01)

(86) Internationale Anmeldenummer:
**PCT/EP2014/077805**

(87) Internationale Veröffentlichungsnummer:
**WO 2015/091382 (25.06.2015 Gazette 2015/25)**

(54) **DRUCKMINDERER**

PRESSURE REDUCER

RÉDUCTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2013 DE 102013021057**

(43) Veröffentlichungstag der Anmeldung:
**26.10.2016** Patentblatt **2016/43**

(73) Patentinhaber: **GRAMMER AG**
**92224 Amberg (DE)**

(72) Erfinder: **LOREY, Konstantin**
**92546 Schmidgaden (DE)**

(74) Vertreter: **Hannke, Christian**
**Hannke Bittner & Partner**
**Patent- und Rechtsanwälte mbB**
**Prüfeninger Straße 1**
**93049 Regensburg (DE)**

(56) Entgegenhaltungen:
**EP-A1- 0 109 220    US-A- 4 770 094**

**EP 3 084 546 B1**

## Beschreibung

Die Erfindung betrifft einen Druckminderer, umfassend einen Außenzylinder mit einem ersten Luftversorgungsanschluss an einer ersten Endseite des Außenzylinders und einem zweiten Luftversorgungsanschluss an einer zweiten Endseite des Außenzylinders, und einen im Außenzylinder beweglich führbaren Kolben mit einer ersten endseitigen Stirnfläche und einer zweiten endseitigen Stirnfläche gemäß Patentanspruch 1.

Druckminderer sind aus dem Stand der Technik bereits bekannt. Diese Vorrichtungen stellen Druckventile oder Drosselventile dar, die in ein bestehendes Medienleitungssystem eingebaut werden, also eine Eingangsseite und eine Ausgangsseite für das entsprechende Medium (meist Gas, insbesondere Luft) aufweisen. Aufgabe der Druckminderer ist es dabei, dafür zu sorgen, dass unabhängig von dem Druck, der auf der Eingangsseite herrscht, ein zulässiger Betriebsdruck auf der Ausgangsseite nicht überschritten wird. Dies wird in der Praxis meist dadurch gelöst, dass der Druck auf der Ausgangsseite kontinuierlich gemessen wird. Dabei wird bei steigendem Druck auf der Ausgangsseite das Ventil immer weiter geschlossen, bis schließlich bei Erreichen des zulässigen Betriebsdrucks das Ventil komplett geschlossen ist. Dies stellt also zumeist eine Sicherheitsmaßnahme dar und findet daher beispielsweise dann Anwendung, wenn hohe Systemdrücke auf für den Arbeitsplatz notwendige Drücke reduziert werden sollen.

Ebenfalls bekannt sind Fahrzeugsitze, die verschiedene Möglichkeiten zur Federung oder Dämpfung aufweisen, um dem Benutzer einen möglichst hohen Sitzkomfort zu bieten. So können beispielsweise luftunterstützte Horizontal- und Vertikalfederungssysteme am Sitz angeordnet sein. Ebenfalls bekannt sind luftunterstützte Systeme, die als zusätzliche Polster im Sitz oder in der Rückenlehne angeordnet sind, wobei diese Polster die Anatomie des Benutzers wie die Lendenwirbelsäule oder die Gesäßmuskulatur unterstützen oder massieren sollen. Die vertikale Auslenkung des Sitzes kann beispielsweise durch eine Luftfeder und einen zusätzlich angebrachten Dämpfer reguliert werden. Es versteht sich, dass die Drücke, die in den genannten Systemen herrschen, wesentlich deren Federungs- und Dämpfungseigenschaften beeinflussen.

Dabei spielt das Gewicht des Benutzers des Sitzes eine wesentliche Rolle. Wenn auf dem bislang unbenutzten Sitz ein Fahrer Platz nimmt, steigt (gesteuert durch die Niveausteuerung) der Systemdruck im Sitz und damit der Druck in der Luftfeder, die zum Beispiel zwischen Sitz und Fahrzeugboden vertikal angeordnet ist. Weiter steigt dieser Systemdruck, wenn statt eines leichten Fahrers ein schwererer Fahrer auf dem Sitz Platz nimmt. Gleichzeitig benötigt der leichte Fahrer durch seine geringere Gewichtskraft in den luftunterstützten Systemen weniger Druck als ein schwerer Fahrer.

Eine bezüglich des Gewichts der Insassen mögliche Anpassung des Systemdrucks ist durch Niveauregelventile möglich, die bei einem Fahrzeugsitz dafür sorgen, dass der Systemdruck abhängig vom Fahrergewicht eingestellt wird. Wenn jedoch die anderen Systeme in Abhängigkeit des herrschenden Systemdrucks eingestellt werden sollen, so dass die Verhältnisse der beiden Drücke, also des Systemdrucks und des Drucks in dem anderen System wie zum Beispiel der Horizontalfederung, einem vorbestimmten Proportionalitätsfaktor entsprechen, kann zum Beispiel kein Drosselventil verwendet werden, da durch die Verwendung eines Drosselventils immer nur ein bestimmter, gleicher Druck eingestellt werden kann, dessen Wert jedoch nicht automatisch proportional zum Wert des Bezugsdrucks angleichbar ist. Eine Vorrichtung zur automatischen, proportionalen Anpassung der luftunterstützen Systeme an unterschiedliche Fahrergewichte durch Druckminderung ist daher bislang aus dem Stand der Technik nicht bekannt.

Um jedem individuellen Benutzer eines einzigen Sitzes den größtmöglichen Komfort zu bieten, ist es Aufgabe vorliegender Erfindung, eine Vorrichtung zu entwickeln, die das Verhältnis der an verschiedenen Komponenten herrschenden Drücke so steuert, dass dieses Verhältnis stets auf einen vorbestimmbaren Proportionalitätsfaktor reguliert wird, und insbesondere ein zweiter Druck in Abhängigkeit von einem ersten Druck gemindert werden kann.

Die EP 0109220 A1 offenbart ein Steuersystem um den Druck und den Druckausgleich in zwei getrennten Druckkreisläufen zu steuern. Um den Druckausgleich zu ermöglichen, ist ein Ausgleichsventil vorgesehen. Dieses Ventil wird durch einen Kolben symmetrisch in zwei Kammern geteilt, welche jeweils an einen unterschiedlichen Druckkreislauf angeschlossen sind. In den Kammern sind jeweils eine Einlass- und eine Auslassöffnung sowie beidseitig eine Feder, die mit dem Kolben und dem Gehäuse verbunden sind, vorgesehen. Bei einem Druckanstieg in einer der Kammern wird der Kolben entgegen der Federkraft verschoben und die jeweilige Auslassöffnung der Kammer geöffnet, um den Druck zu reduzieren.

Die US 4,770,094 A offenbart ein Steuerventil zum Einstellen einer bestimmten Abhängigkeit von zwei Drücken zweier unabhängiger hydraulischer Drucksysteme. Das Steuerventil weist hierfür einen unteren und einen oberen Kolben auf, wobei die Stirnfläche des Kolbens mit einem in einem ersten Druckraum herrschenden Druck und die Stirnfläche mit einem in einem zweiten Druckraum herrschenden Druck beaufschlagt wird. Zudem weist das Ventil zwei getrennte Überlaufspalten auf, welche die Druckräume mit den dazugehörigen Niederdruckräumen verbinden.

Die Aufgabe der Erfindung wird gelöst von einem Druckminderer, umfassend einen Außenzylinder mit einem ersten Luftversorgungsanschluss an einer ersten Endseite des Außenzylinders und einem zweiten Luftversorgungsanschluss an einer zweiten Endseite des Außenzylinders, und einen im Außenzylinder beweglich führbaren Kolben mit einer ersten endseitigen Stirnfläche und einer zweiten endseitigen Stirnfläche, wobei zwischen dem ersten Luftversorgungsanschluss des Außenzylinders und der ersten Stirnfläche des Kolbens eine erste Luftkammer und zwischen dem zweiten Luftversorgungsanschluss des Außenzylinders und der zweiten Stirnfläche des Kolbens eine zweite Luftkammer angeordnet ist, wobei die Flächeninhalte der beiden Stirnflächen des Kolbens unterschiedlich groß sind, und wobei der Druckminderer geeignet ist, einen in der zweiten Luftkammer herrschenden zweiten Luftdruck proportional zu einem in der ersten Luftkammer herrschenden ersten Luftdruck impulsweise zu mindern, indem zeitweise bei einer ersten Stellung des Kolbens gegenüber dem Außenzylinder eine aus zwei Teilen bestehende erste Luftverbindung zwischen der ersten Luftkammer und der zweiten Luftkammer ausgebildet ist.

Durch die vorliegend gewählte Anordnung aus unterschiedlichen Kolbendurchmessern, Federvorspannkräften und entsprechend ausgestalteten Verbindungsleitungen zwischen den Kammern kann eine Regulierung der herrschenden Drücke stets so durchgeführt werden, dass nach der Regulierung wieder ein Verhältnis zwischen den beiden Drücken herrscht, das dem Verhältnis der Stirnflächen des Kolbens, also dem vorbestimmten Verhältnis entspricht. Und zwar ist das System mittels der automatischen Regulierung stets um Rückführung der Gleichgewichtsstellung bzw. neutralen Stellung bemüht. Diese automatische Regulierung wird weiter unten bei der Beschreibung der Figuren näher beschrieben.

Wenn also ein Fahrer auf dem Fahrzeugsitz Platz nimmt, wird zunächst über eine manuelle, bevorzugt aber automatische Niveauregelung der Systemdruck im Sitz reguliert. Die automatische Niveauregelung beinhaltet zum Beispiel die Messung des Fahrergewichts durch geeignete Messmittel oder Sensoren an der Sitzplatte. Die Stauchung der Federung, zum Beispiel einer vertikalen Luftfeder, die zwischen Sitzunterseite und Fahrzeugboden angeordnet ist, wird daraufhin so reguliert, dass eine komfortable Federung unabhängig vom Fahrergewicht möglich ist. Dem System wird also Luft zugeführt, bis die Federn in einer Neutralstellung sind. Dieser eingestellte Systemdruck stellt den Referenzdruck für die darauffolgende Regulierung bzw. Minderung eines anderen Drucks dar.

Wenn der Systemdruck, also der Druck in der ersten Luftkammer steigt, bleibt das System nicht mehr im Gleichgewicht, da das Verhältnis beider Drücke nicht mehr dem vorbestimmbaren Proportionalitätsfaktor entspricht; dann bewegt sich der Kolben zur zweiten Luftkammer bis zu einer Anschlagsfläche hin, und durch die erste Luftverbindung erfolgt eine Druckerhöhung in der zweiten Luftkammer, woraufhin sich der Kolben wieder in die neutrale Stellung bewegt. Mittels der ersten Luftverbindung wird auch sichergestellt, dass bei Luftverbrauch am zweiten Luftversorgungsanschluss, also wenn der in der zweiten Kammer herrschende zweite Druck sinkt und sich der Kolben aus der neutralen Stellung in Richtung der zweiten Kammer bewegt, sich also in der oben beschriebenen ersten Stellung befindet, eine bestimmte Menge Luft aus der ersten Kammer in die zweite abführbar ist, so dass sich der Kolben wieder in Richtung der neutralen Stellung bewegt und der zweite Druck also erhöht wird, bis das Verhältnis der beiden Drücke zueinander wieder dem Proportionalitätsfaktor gemäß der neutralen Stellung entspricht. Bei permanentem Luftverbrauch wird dieser Vorgang immer wieder wiederholt und über die erste Luftverbindung die erste Kammer mit der Luft aus der zweiten Kammer impulsweise gespeist. Die erste Luftkammer ist dabei stets mit einer unerschöpflichen Luftversorgung verbunden.

Eine weitere bevorzugte Ausführungsform sieht vor, dass zeitweise bei einer zweiten Stellung des Kolbens gegenüber dem Außenzylinder eine aus zwei Teilen bestehende zweite Luftverbindung ausgebildet ist, mittels der Luft aus der zweiten Luftkammer an die Umgebung abführbar ist.

Die zweite Luftverbindung wird dann benötigt, wenn ein Fahrerwechsel stattfindet und der Systemdruck im Sitz, also der Druck in der ersten Kammer, nun sinkt, da statt eines schweren Fahrers unmittelbar darauf ein leichter Fahrer Platz nimmt. Das Verhältnis zwischen dem ersten Druck in der ersten Kammer und dem zweiten Druck in der zweiten Kammer entspricht nun erneut nicht mehr dem Proportionalitätsfaktor, sondern der zweite Druck muss gemindert werden. Mittels der zweiten Luftverbindung ist hier sichergestellt, dass in der beschriebenen Situation, wenn sich der Kolben aus der neutralen Stellung in Richtung der ersten Kammer bis zu einer weiteren Anschlagsfläche des Außenzylinders bewegt, sich also in der oben beschriebenen zweiten Stellung an der weiteren Anschlagsfläche anliegend befindet, eine bestimmte Menge Luft aus der zweiten Kammer an die Umgebungsluft abgeführt werden kann, so dass sich der Kolben wieder in Richtung der neutralen Stellung bewegt, bis der zweite Druck in der zweiten Kammer soweit gemindert ist, dass das Verhältnis der beiden Drücke zueinander wieder dem Proportionalitätsfaktor gemäß der neutralen Stellung entspricht.

Eine weitere bevorzugte Ausführungsform sieht vor, dass ein aus zwei miteinander in Verbindung stehenden Teilen bestehender, innerhalb des Kolbens verlaufender Kanal geeignet ist, in der ersten Stellung des Kolbens den ersten Teil der ersten Luftverbindung auszubilden und in der zweiten Stellung des Kolbens den ersten Teil der zweiten Luftverbindung auszubilden.

Das heißt also, dass jeweils ein Teil sowohl der ersten als auch der zweiten Luftverbindung abhängig von der Stellung des Kolbens im Zylinder durch einen entsprechend ausgebildeten Kanal im Kolben selbst ausgebildet sind. Eine weitere Luftversorgung oder ein weiterer Luftkanal ist daher nicht notwendig. Dies ermöglicht eine einfache und kostengünstige Ausgestaltung des erfindungsgemäßen Druckminderers.

Bevorzugt wird der zweite Teil der ersten Luftverbindung durch eine Bypassleitung ausgebildet. Das heißt, dass in der oben beschriebenen ersten Stellung des Kolbens der Kanal im Kolben als erster Teil der ersten Luftverbindung eine direkte Verbindung mit einer Bypassleitung als zweiten Teil der ersten Luftverbindung aufweist. Befindet sich der Kolben in der ersten Stellung, hat der Kanal im Kolben eine direkte Verbindung zur Bypassleitung, wodurch die erste Luftverbindung zwischen der zweiten und der ersten Luftkammer vollständig ausgebildet ist.

Bevorzugt wird der zweite Teil der zweiten Luftverbindung durch eine aus dem Außenzylinder herausführende Entlüftungsleitung ausgebildet. Das heißt, dass in der oben beschriebenen zweiten Stellung des Kolbens der Kanal im Kolben als erster Teil der zweiten Luftverbindung eine direkte Verbindung mit einer Entlüftungsleitung als zweiten Teil der zweiten Luftverbindung aufweist. Diese Entlüftungsleitung führt beispielsweise bei einer Austrittsöffnung aus der zweiten Luftkammer heraus aus dem Außenzylinder in die Umgebung. Befindet sich der Kolben in der zweiten Stellung, hat der Kanal im Kolben eine direkte Verbindung zur Entlüftungsleitung, wodurch die zweite Luftverbindung zwischen der zweiten Kammer und der Umgebung vollständig ausgebildet ist.

Um den Kolben im Zylinder ausreichend zu stabilisieren und insbesondere ein Flattern zu vermeiden bzw. eine Schalthysterese zu gewährleisten, kann es vorteilhaft sein, wenn zwischen dem ersten Luftversorgungsanschluss des Außenzylinders und der ersten Stirnfläche des Kolbens eine erste mechanische Druckfeder mit einer ersten Federvorspannkraft und zwischen dem zweiten Luftversorgungsanschluss des Außenzylinders und der zweiten Stirnfläche des Kolbens eine zweite mechanische Druckfeder mit einer zweiten Federvorspannkraft angeordnet ist. Es werden bevorzugt identische Druckfedern verwendet, somit sind in der neutralen Stellung beide Federvorspannkräfte gleich.

Diese Druckfedern stützen den Kolben im Außenzylinder durch ihre Federkräfte zusätzlich ab, so dass eine korrekt geführte Bewegung des Kolbens realisiert wird. Je nach Stellung des Kolbens können dabei die Druckfedern mehr oder weniger stark komprimiert vorliegen. Bei starker Komprimierung der Druckfeder, wie zum Beispiel bei der zweiten Druckfeder in der ersten Stellung des Kolbens oder bei der ersten Druckfeder in der zweiten Stellung des Kolbens, ist deren Federvorspannkraft erhöht gegenüber der Federvorspannkraft in der neutralen Stellung. Ist die Druckfeder hingegen entspannt, wie zum Beispiel bei der zweiten Druckfeder in der zweiten Stellung des Kolbens oder bei der ersten Druckfeder in der ersten Stellung des Kolbens, ist die Federvorspannkraft geringer gegenüber der Federvorspannkraft in der neutralen Stellung.

Die beiden Stirnflächen des Kolbens haben einen unterschiedlichen Flächeninhalt. Das heißt, dass der Kolben beispielsweise aus einem ersten zylindrischen Teil besteht, der mechanisch fest mit einem zweiten zylindrischen Teil des Kolbens verbunden ist. Beispielsweise ist der Außendurchmesser des zweiten Teils des Kolbens und damit der Flächeninhalt der zweiten Stirnfläche des Kolbens größer als der Durchmesser des ersten Teils des Kolbens und damit größer als der Flächeninhalt der ersten Stirnfläche des Kolbens. Das Verhältnis von zweiter Stirnfläche des Kolbens zu erster Stirnfläche des Kolbens entspricht in der neutralen Stellung des Kolbens dem Verhältnis von erstem Druck in der ersten Luftkammer zu zweitem Druck in der zweiten Luftkammer.

Beispielsweise entspricht das Verhältnis des Flächeninhalts der zweiten Stirnfläche des Kolbens zum Flächeninhalt der ersten Stirnfläche des Kolbens einem Wert aus einem Bereich von 1,2 bis 20, bevorzugt 2.

Beispielsweise verläuft der Kanal im Kolben nur in einem Teil des Kolbens, also nur im zweiten Teil des Kolbens und nicht im ersten Teil des Kolbens. Am Übergang zwischen dem ersten Teil des Kolbens und dem zweiten Teil des Kolbens befindet sich entsprechend der zylindrischen Grundform beider Teile eine ringförmig ausgestaltete Übergangsfläche. Diese ist beispielsweise geeignet, eine Anschlagsfläche bei der Bewegung des Kolbens in die beschriebene zweite Stellung zu bilden, da sie mit einer entsprechenden Übergangsfläche oder auch Anschlagsfläche des Außenzylinders zum Anschlag kommt.

Um den verschiedenen Außendurchmessern des Kolbens gerecht zu werden, weist der Hohlraum des Außenzylinders dementsprechend unterschiedliche Innendurchmesser auf, um den Kolben korrekt führen zu können. Der Hohlraum im Außenzylinder besteht also im Wesentlichen aus einem ersten Teil mit einem ersten Innendurchmesser und einem zweiten Teil mit einem zweiten Innendurchmesser.

Es kann vorteilhaft sein, wenn die erste und die zweite Druckfeder identisch sind und insbesondere also einen gleichen Außendurchmesser aufweisen. Dadurch, aber auch, wenn unterschiedliche Druckfedern mit unterschiedlichem Außendurchmesser verwendet werden, kann es vorteilhaft sein, wenn an den Enden der beiden Luftkammern der Innendurchmesser des Hohlraums des Außenzylinders an den Außendurchmesser der Druckfedern angepasst ist, wenn also der Hohlraum des Außenzylinders zusätzlich zu den oben genannten ersten und zweiten Teilen einen weiteren dritten und vierten Teil aufweist, wobei die Innendurchmesser des dritten und vierten Teils an die Außendurchmesser der Druckfedern angepasst sind.

Angepasst heißt beispielsweise, dass die Außendurchmesser der Druckfedern bzw. des Kolbens kleiner sind als die Innendurchmesser des Hohlraums des Außenzylinders, damit die Druckfedern und der Kolben Platz finden, aber nur geringfügig kleiner, damit eine Führung des Kolbens bzw. Abstützung der Druckfedern noch möglich ist.

Beispielsweise ist der dritte Teil an der zweiten Luftkammer direkt am zweiten Luftversorgungsanschluss angeordnet. Beispielsweise schließt sich an den dritten Teil des Außenzylinders unmittelbar der zweite Teil und darauffolgend der erste Teil an. Beispielsweise schließt sich an den ersten Teil der vierte Teil an, der dann zwangsläufig an der ersten Luftkammer direkt am ersten Luftversorgungsanschluss angeordnet ist. Zwischen dem ersten Teil und dem zweiten Teil des Hohlraums des Außenzylinders befindet sich eine erste ringförmige Übergangsfläche, auch als Anschlagsfläche für den Kolben anzusehen. Wenn ein dritter und/ oder ein vierter Teil vorhanden sind, befinden sich bei

**EP 3 084 546 B1**

einer Anordnung des ersten, zweiten, dritten und vierten Teils wie oben beschrieben zwischen dem dritten und dem zweiten Teil ebenfalls eine zweite ringförmige Übergangsfläche und/ oder zwischen dem ersten und dem vierten Teil ebenfalls eine dritte ringförmige Übergangsfläche.

Befindet sich der Kolben in der neutralen Stellung, weisen also beide Druckfedern die gleiche Vorspannkraft auf und ist weder die erste noch die zweite Luftverbindung ausgebildet, dann existiert zwischen der Übergangsfläche zwischen den beiden Teilen des Kolbens und der ersten Übergangsfläche zwischen dem zweiten und dem ersten Teil des Hohlraums des Außenzylinders ein hohlzylinderförmiger Hohlraum.

Befindet sich der Kolben in der ersten Stellung, hat sich also der Kolben in Richtung der zweiten Luftkammer bewegt, und ist wie oben beschrieben die zweite Druckfeder komprimiert, dann liegt die zweite Stirnfläche des Kolbens beispielsweise an der zweiten Übergangsfläche an. Abhängig von der Dimension und der Federvorspannkraft der verwendeten Druckfeder kann auch ein Abstand zwischen der zweiten Übergangsfläche und der zweiten Stirnfläche des Kolbens verbleiben. Existiert kein Unterschied zwischen den Innendurchmessern des Kolbens in der zweiten Luftkammer, wird also beispielsweise auf einen separaten dritten Teil des Hohlraums des Außenzylinders mit im Vergleich zum zweiten Teil des Hohlraums des Außenzylinders unterschiedlichem Außendurchmesser verzichtet, so dass der zweite Teil des Hohlraums des Außenzylinders bis zum zweiten Luftversorgungsanschluss verlaufend angeordnet ist, dann wird die Stellung der zweiten Stirnfläche des Kolbens durch die Federvorspannkraft der zweiten Druckfeder bestimmt.

Bei der Übergangsstelle zwischen den beiden Teilen des Kolbens vergrößert sich der hohlzylinderförmige Hohlraum zwischen der Übergangsfläche zwischen den beiden Teilen des Kolbens und der ersten Übergangsfläche zwischen dem zweiten und dem ersten Teil des Hohlraums des Außenzylinders, da sich der Kolben ja von der ersten Übergangsfläche zwischen dem zweiten und dem ersten Teil des Hohlraums des Außenzylinders wegbewegt hat. Der Kanal im Kolben hat in dieser Stellung erfindungsgemäß eine direkte Verbindung zur Bypassleitung, wodurch die erste Luftverbindung zwischen der zweiten und der ersten Luftkammer vollständig ausgebildet ist.

Befindet sich der Kolben in der zweiten Stellung, hat sich also der Kolben in Richtung der ersten Luftkammer bewegt, und ist wie oben beschrieben die erste Druckfeder komprimiert, dann liegt die erste Stirnfläche des Kolbens beispielsweise an der dritten Übergangsfläche des Hohlraums des Außenzylinders an. Abhängig von der Dimension und der Federvorspannkraft der verwendeten Druckfeder kann auch ein Abstand zwischen der dritten Übergangsfläche des Hohlraums des Außenzylinders und der ersten Stirnfläche des Kolbens verbleiben. Existiert kein Unterschied zwischen den Innendurchmessern des Kolbens in der ersten Luftkammer, wird also beispielsweise auf einen separaten vierten Teil des Hohlraums des Außenzylinders mit im Vergleich zum ersten Teil des Hohlraums des Außenzylinders unterschiedlichem Außendurchmesser verzichtet, so dass der erste Teil des Hohlraums des Außenzylinders bis zum ersten Luftversorgungsanschluss verlaufend angeordnet ist, dann wird die Stellung der ersten Stirnfläche des Kolbens durch die Federvorspannkraft der ersten Druckfeder bestimmt. Bei der Übergangsstelle zwischen den beiden Teilen des Kolbens verkleinert sich der hohlzylinderförmige Hohlraum zwischen der Übergangsfläche zwischen den beiden Teilen des Kolbens und der ersten Übergangsfläche zwischen dem zweiten und dem ersten Teil des Hohlraums des Außenzylinders, da sich der Kolben ja auf die erste Übergangsfläche zwischen dem zweiten und dem ersten Teil des Hohlraums des Außenzylinders zubewegt hat.

Eine Endstellung des Kolbens kann so ausgestaltet sein, dass die Übergangsfläche zwischen den beiden Teilen des Kolbens an der ersten Übergangsfläche zwischen dem zweiten und dem ersten Teil des Hohlraums des Außenzylinders anliegt. Der Kanal im Kolben hat in dieser Stellung erfindungsgemäß eine direkte Verbindung zur Entlüftungsleitung, wodurch die zweite Luftverbindung zwischen der zweiten Luftkammer und der Umgebung vollständig ausgebildet ist. Beispielsweise ist die Austrittsöffnung der Entlüftungsleitung so angeordnet, dass sie in der zweiten Stellung des Kolbens aus dem hohlzylinderförmigen Hohlraum zwischen der Übergangsfläche zwischen den beiden Teilen des Kolbens und der ersten Übergangsfläche zwischen dem zweiten und dem ersten Teil des Hohlraums des Außenzylinders herausführt.

Der beschriebene Druckminderer kann also dazu eingesetzt werden, einen zweiten Druck in Abhängigkeit von einem ersten Druck oder Systemdruck so zu regulieren, dass nach erfolgter Regulierung das Verhältnis der beiden Drücke wieder einem vorbestimmbare Proportionalitätsfaktor entspricht. Erfindungsgemäß entspricht dieses proportionale Verhältnis dem umgekehrten Verhältnis der Stirnflächen des Kolbens, die den den beiden Drücken zugeordneten Luftkammern benachbart sind. Das heißt also, das Verhältnis zwischen dem ersten und dem zweiten Druck entspricht in der neutralen Stellung dem vorbestimmten Proportionalitätsfaktor und gleichzeitig entspricht das Verhältnis zwischen der zweiten und dem ersten Stirnfläche dem gleichen vorbestimmbaren Proportionalitätsfaktor. Der vorbestimmbare Proportionalitätsfaktor lässt sich in diesem Fall also einfach durch eine geeignete Auswahl der Flächeninhalte der Stirnflächen, also letztendlich durch die Wahl der beiden Außendurchmesser der beiden Teile des Kolbens vorbestimmen.

Um die beschriebenen Vorteile in der Praxis einsetzen zu können, ist es vorteilhaft, wenn der Druckminderer zwischen einer dem ersten Luftversorgungsanschluss zugeordneten ersten Komponente und einer dem zweiten Luftversorgungsanschluss zugeordneten zweiten Komponente anordenbar ist.

So kann beispielsweise die erste Komponente eine Vorrichtung in einem Fahrzeugsitz, insbesondere eine Niveausteuerung oder eine Vertikalfeder, und die zweite Komponente eine Horizontalfederung, ein Dämpfer, ein Hydrospeicher, eine Sitzpolster-Konturanpassung oder ein Lendenwirbelmassagesystem des Fahrzeugsitzes sein.

Die vertikale Luftfeder des Fahrzeugsitzes ist dabei beispielsweise an einem Scherengestell mit zwei Scheren, die in ihrer Mitte miteinander rotatorisch verbunden sind, zwischen der Sitzunterseite und dem Fahrzeugboden angeordnet. Bei einer Belegung des Sitzes und der daraus resultierenden vertikalen Verschiebung der Sitzunterseite drehen sich die Scheren und bewegen sich beispielsweise aufeinander zu. Dies bewirkt gleichzeitig eine Zunahme des Drucks in der vertikalen Luftfeder, die dem zweiten Luftversorgungsanschluss zugeordnet ist.

Der Druckminderer ist beispielsweise zwischen der vertikalen Luftfeder als ersten Komponente und einer der oben beschriebenen Systeme als zweiter Komponente angeordnet. Der Kolben bewegt sich also in die erste Stellung und es erfolgt die Regulierung wie oben beschrieben. Analog dazu erfolgt die Regulierung bei Fahrerwechsel, wenn beispielsweise der erste Druck sinkt.

Beispielsweise kann es erforderlich sein, den Druck in einer Horizontalfederung auf 75% des Systemdrucks in der ersten Komponente, zum Beispiel also der Vertikalfederung, zu regulieren. Der Proportionalitätsfaktor, der in diesem Fall zur Gleichgewichtsstellung erforderlich ist, entspricht also dabei einem Wert von 4/3. Gleiche Werte können beispielsweise für den Hydrospeicher und den Dämpfer gelten. Analog dazu erfordert die Sitzpolster-Konturanpassung beispielsweise eine Regulierung auf 10% des Systemdrucks, was einem Wert des Proportionalitätsfaktors von 10 entspricht. Analog dazu erfordert das Lendenwirbelmassagesystem beispielsweise eine Regulierung auf 5% des Systemdrucks, was einem Wert des Proportionalitätsfaktors von 20 entspricht.

Um sicherzustellen, dass der Kanal im Kolben geeignet ist, sowohl den ersten Teil der ersten Luftverbindung als auch den ersten Teil der zweiten Luftverbindung auszubilden, ist es vorteilhaft, wenn die Teile des Kanals zylinderförmig sind, wobei die Mittelachse des ersten Teils fluchtend zur Mittelachse des Kolbens angeordnet ist und die Mittelachse des zweiten Teils senkrecht zur Mittelachse des ersten Teils verlaufend angeordnet ist, wobei der zweite Teil durch den Kolben durchgehend verlaufend angeordnet ist. Bevorzugt ist der zweite Teil so angeordnet, dass er seine Mittelachse die Mittelachse des Kolbens kreuzt, dass er also durch den Kolben an dessen dickster Stelle verlaufend angeordnet ist.

Weitere Vorteile, Ziele und Eigenschaften vorliegender Erfindung werden anhand anliegender Zeichnung und nachfolgender Beschreibung erläutert, in welchen beispielhaft der Aufbau und die Funktionsweise eines proportionalen Impulsdruckminderers dargestellt und beschrieben ist. In der Zeichnung zeigen:

Figur 1    schematisch eine Querschnittsansicht eines proportionalen Impulsdruckminderers in Neutralstellung;

Figur 2    schematisch eine Querschnittsansicht des proportionalen Impulsdruckminderers aus der Figur 1 in Belüftungsstellung;

Figur 3    schematisch eine Querschnittsansicht des proportionalen Impulsdruckminderers aus der Figur 1 in Entlüftungsstellung;

Figur 4    Einsatzgebiete des erfindungsgemäßen Druckminderers

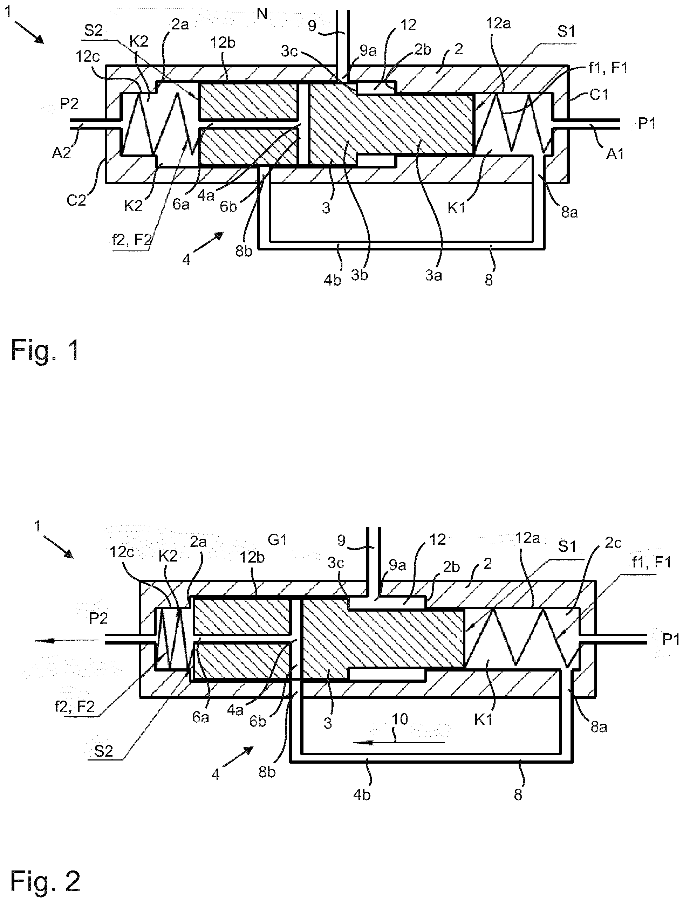

Figur 1 zeigt den erfindungsgemäßen Druckminderer 1 in einer Gleichgewichtsstellung bzw. neutralen Stellung N. Er ist in diesem Beispiel aufgebaut aus einem Außenzylinder 2 und einem darin beweglich führbaren Kolben 3. An den beiden Endseiten C1, C2 des Außenzylinders 2 ist jeweils ein Luftversorgungsanschluss A1, A2 angeordnet. Zwischen diesen Luftversorgungsanschlüssen A1, A2 und den Stirnflächen S1, S2 des Kolbens ist jeweils eine Luftkammer K1, K2 ausgebildet. In diesem Beispiel ist der Kolben 3 mit zwei Druckfedern f1 und f2 mit den Federvorspannkräften F1 und F2 im Außenzylinder 2 stabilisiert. In der ersten Luftkammer K1 herrscht der Druck P1 und in der zweiten Luftkammer herrscht der Druck P2. Der Außenzylinder 2 weist dabei einen Hohlraum 12 auf, in dem der Kolben 3 beweglich führbar ist.

Dieser Hohlraum ist in diesem Beispiel unterteilt in einen ersten Teil 12a, einen zweiten Teil 12b und einen dritten Teil 12c, wobei der dritte Teil 12c am zweiten Luftversorgungsanschluss A2 angeordnet ist, und wobei der zweite Teil 12b direkt im Anschluss an den dritten Teil 12c angeordnet ist, und wobei der erste Teil 12a direkt im Anschluss an den zweiten Teil angeordnet ist. Ein vierter Teil, der beispielsweise direkt im Anschluss an den ersten Teil 12a und benachbart zum ersten Luftversorgungsanschluss A1 angeordnet sein könnte, ist in diesem Beispiel nicht vorhanden, das heißt, der erste Teil 12a verläuft bis zum ersten Luftversorgungsanschluss A1. Zwischen dem dritten Teil 12c und dem zweiten Teil 12b ist eine erste ringförmige Übergangsfläche 2a und zwischen dem zweiten Teil 12b und dem ersten Teil 12a ist eine zweite ringförmige Übergangsfläche 2b ausgebildet.

Der Kolben 3 besteht aus einem ersten Teil 3a und einem zweiten Teil 3b, die beide zylinderförmig sind. In diesem Beispiel ist der Durchmesser und damit die Stirnfläche S2 des zweiten Teils 3b des Kolbens größer als der Durchmesser und damit die Stirnfläche S1 des ersten Teils 3a des Kolbens 3. Am Übergang zwischen dem ersten Teil 3a und dem zweiten Teil 3b des Kolbens ist eine ringförmige Übergangsfläche 3c ausgebildet.

Im Kolben 3 verläuft ein Kanal 6, der in einen ersten Teil 6a und einen zweiten Teil 6b unterteilt ist. Der erste Teil 6a des Kanals 6 ist dabei zylindrisch ausgebildet, wobei seine Mittelachse mit der Mittelachse des Kolbens 3 fluchtend angeordnet ist. Direkt damit verbunden ist der zweite, ebenfalls zylinderförmige Teil 6b des Kanals 6. Die Mittelachse des zweiten Teils 6b ist senkrecht zur Mittelachse des ersten Teils 6a verlaufend angeordnet, wobei der zweite Teil 6b durch den Kolben 3 durchgehend verlaufend angeordnet ist. In diesem Beispiel ist der zweite Teil 6b so angeordnet, dass er seine Mittelachse die Mittelachse des Kolbens 3 kreuzt.

Aus der ersten Luftkammer K1 verläuft an einer Austrittsöffnung 8a eine Bypassleitung 8, die im Anschluss außerhalb des Außenzylinders 2 verläuft und an einer Eintrittsöffnung 8b wieder in den Außenzylinder 2 hineinführt. In der neutralen Stellung N besteht keine erste Luftverbindung 4 zwischen der ersten Luftkammer K1 und der zweiten Luftkammer K2, da die Kolbenstellung so angeordnet ist, dass die Bypassleitung 8 an der Eintrittsöffnung 8b keine Verbindung zum Kanal 6 im Kolben 3 ausbildet.

Gleichzeitig ist an einer weiteren Austrittsöffnung 9a eine Entlüftungsleitung 9 angeordnet, die zur Umgebung U hinführt. In der neutralen Stellung N besteht keine zweite Luftverbindung 5 zwischen der zweiten Luftkammer K2 und der Umgebung U, da die Kolbenstellung so angeordnet ist, dass die Entlüftungsleitung 9 an der Austrittsöffnung 9a keine Verbindung zum Kanal 6 im Kolben 3 ausbildet.

Zwischen der Übergangsfläche 2b zwischen dem zweiten Teil 12b und dem ersten Teil 12a des Hohlraums 12 des Außenzylinders 2 und der Übergangsfläche 3c zwischen dem ersten Teil 3a und dem zweiten Teil 3b des Kolbens ist ein zylinderförmiger Hohlraum ausgebildet. Die Stirnflächen S1, S2 des Kolbens 2 sind durch die Vorspannkräfte F1, F2 der Druckfedern f1, f2 von den Luftversorgungsanschlüssen A1, A2 beabstandet positioniert. Gemäß Figur 1 ist hier eine neutrale Stellung N gezeigt, bei der die Druckfedern f1 und f2 gleich sind und auch gleich angeordnet sind, also insbesondere auch deren Federvorspannkräfte F1 und F2 gleich sind.

Die Gleichgewichtsstellung bzw. neutrale Stellung N des Systems, gezeigt in Figur 1, ist dadurch charakterisiert, dass ein Proportionalitätsfaktor n, wobei n beispielsweise größer als 1 ist, sowohl das Verhältnis zwischen den Flächeninhalten S2 und S1 als auch das Verhältnis zwischen den Drücken P1 und P2 beschreibt.

Es gilt also gemäß einer Gleichung 1:

[Gleichung 1]:

$$\frac{S2}{S1} = n = \frac{P1}{P2}$$

In der neutralen Stellung sind beide Federvorspannkräfte F1 und F2 gleich. Es gilt dann in der neutralen Stellung N gemäß einer Gleichung 2:

[Gleichung 2]:

$$F1 = F2$$

Die Gleichgewichtsstellung oder neutrale Stellung N des Systems wird also beschrieben durch die Gleichung 3:

[Gleichung 3]:

$$S1 \cdot P1 + F1 = S2 \cdot P2 + F2$$

Wenn der Systemdruck, also der Druck P1 in der ersten Luftkammer K1 steigt, und das System nicht mehr im Gleichgewicht ist, da das Verhältnis beider Drücke P1, P2 nicht mehr dem vorbestimmbaren Proportionalitätsfaktor n entspricht, bewegt sich der Kolben 3 nach links zur zweiten Luftkammer K2 bis zur Anschlagsfläche 2a. In diesem gezeigten Beispiel wird die Endstellung des Kolbens 3 durch die Anschlagsfläche 2a bestimmt.

Es gilt also gemäß Gleichung 4:

[Gleichung 4]:

$$n < \frac{P1}{P2}$$

Daraus resultiert Gleichung 5, die den Zustand im System in der Stellung G1 beschreibt:

[Gleichung 5]:

$$S1 \cdot P1 + F1 > S2 \cdot P2 + F2$$

Gleichzeitig steht der Kolben 3 in der ersten Stellung G1 so, dass zwischen der Bypassleitung 8 und dem Kanal 6 im Kolben 3 eine erste Luftverbindung 4 ausgebildet wird. Mittels der ersten Luftverbindung 4 ist nun sichergestellt, dass bei Luftverbrauch am zweiten Luftversorgungsanschluss A2, also wenn der in der zweiten Kammer K2 herrschende zweite Druck P2 sinkt und sich der Kolben 3 aus der neutralen Stellung N in Richtung der zweiten Kammer K2 bewegt, sich also in der oben beschriebenen ersten Stellung G1 befindet, eine bestimmte Menge Luft aus der ersten Kammer K1 in die zweite Kammer K2 abführbar ist (Pfeil 10), so dass sich der Kolben 3 wieder in Richtung der neutralen Stellung N bewegt und der zweite Druck P2 also erhöht wird, bis das Verhältnis der beiden Drücke P1, P2 zueinander wieder dem Proportionalitätsfaktor n gemäß der neutralen Stellung N entspricht. Bei permanentem Luftverbrauch wird dieser Vorgang immer wieder wiederholt und über die erste Luftverbindung 4 die erste Kammer K1 mit der Luft aus der zweiten Kammer K2 impulsweise gespeist. Die erste Luftkammer K1 ist dabei stets mit einer unerschöpflichen Luftversorgung verbunden.

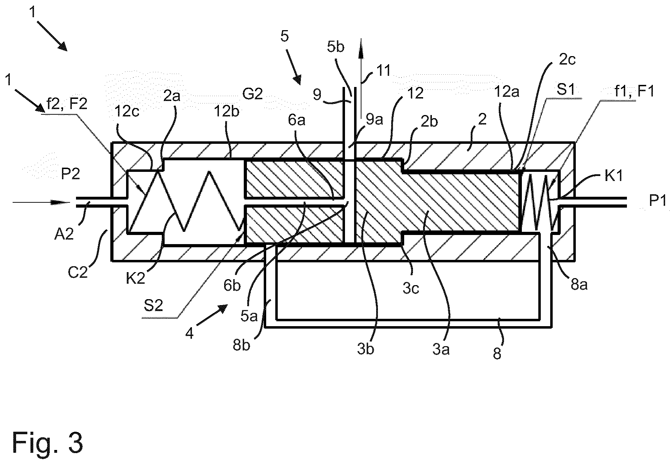

Figur 3 beschreibt die Ausbildung der zweiten Luftverbindung 5. Die zweite Luftverbindung 5 wird dann benötigt, wenn ein Fahrerwechsel stattfindet und der Systemdruck im Sitz, also der Druck P1 in der ersten Kammer K1, nun sinkt, da statt eines schweren Fahrers unmittelbar darauf ein leichter Fahrer Platz nimmt. Das Verhältnis zwischen dem ersten Druck P1 in der ersten Luftkammer K1 und dem zweiten Druck P2 in der zweiten Luftkammer K2 entspricht nun erneut nicht mehr dem Proportionalitätsfaktor n, sondern der zweite Druck P2 muss gemindert werden. Der Kolben 3 steht dabei in diesem Beispiel so, dass die Übergangsfläche 3c zwischen den beiden Teilen 3a und 3b des Kolbens 3 in Kontakt mit der Übergangsfläche 2b zwischen dem zweiten Teil 12b und dem ersten Teil 12a des Hohlraums 12 des Außenzylinders 2 steht.

Es gilt also gemäß Gleichung 6:

[Gleichung 6]:

$$n > \frac{P1}{P2}$$

Daraus resultiert Gleichung 7, die den Zustand im System in der Stellung G2 beschreibt:

[Gleichung 7]:

$$S1 \cdot P1 + F1 < S2 \cdot P2 + F2$$

Gleichzeitig steht der Kolben 3 in der zweiten Stellung G2 so, dass zwischen der Entlüftungsleitung 9 und dem Kanal 6 im Kolben 3 eine zweite Luftverbindung 5 ausgebildet wird. Mittels der zweiten Luftverbindung 5 ist hier sichergestellt, dass in der beschriebenen Situation, wenn sich der Kolben 3 aus der neutralen Stellung N in Richtung der ersten Luftkammer K1 bewegt, sich also in der oben beschriebenen zweiten Stellung G2 befindet, eine bestimmte Menge Luft aus der zweiten Kammer K2 an die Umgebungsluft oder Umgebung U abgeführt werden kann (Pfeil 11), so dass sich der Kolben 3 wieder in Richtung der neutralen Stellung N bewegt, bis der zweite Druck P2 in der zweiten Kammer K2 soweit gemindert ist, dass das Verhältnis der beiden Drücke P1, P2 zueinander wieder dem Proportionalitätsfaktor n gemäß der neutralen Stellung N entspricht.

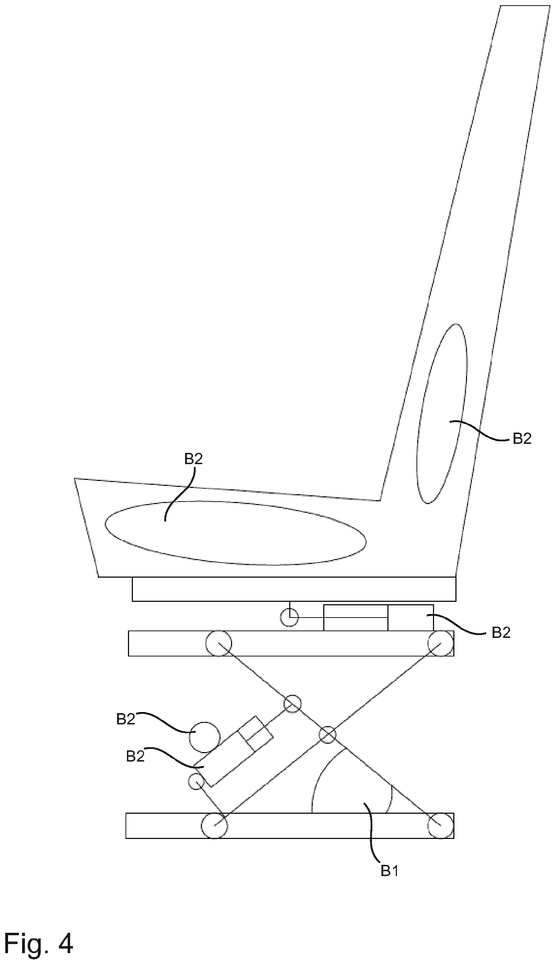

Figur 4 zeigt verschiedene luftunterstützte Systeme, die beispielsweise einem Fahrzeugsitz zugeordnet sein können. So entspricht die erste Komponente (B1) einer Vorrichtung in einem Fahrzeugsitz, insbesondere einer Vertikalfeder, und die zweite Komponente (B2) beispielsweise einer Horizontalfederung, einem Dämpfer, einem Hydrospeicher, einer Sitzpolster-Konturanpassung oder einer Lendenwirbelmassagesystem des Fahrzeugsitzes.

Sämtliche in den Anmeldungsunterlagen offenbarten Merkmale werden als erfindungswesentlich beansprucht, sofern sie einzeln oder in Kombination gegenüber dem Stand der Technik neu sind.

Bezugszeichenliste

| | |
|---|---|
| 1 | Druckminderer |
| 2 | Außenzylinder |
| 2a | Übergangsfläche (Anschlagsfläche) |

| | |
|---|---|
| 2b | Übergangsfläche (Anschlagsfläche) |
| 3 | Kolben |
| 3a | Teil des Kolbens |
| 3b | Teil des Kolbens |
| 3c | Übergangsfläche (Anschlagsfläche) |
| 4 | erste Luftverbindung |
| 4a | erster Teil der ersten Luftverbindung (Kanal 6 im Kolben) |
| 4b | zweiter Teil der ersten Luftverbindung (Bypassleitung) |
| 5 | zweite Luftverbindung |
| 5a | erster Teil der zweiten Luftverbindung (Kanal 6 im Kolben) |
| 5b | zweiter Teil der zweiten Luftverbindung (Entlüftungskanal) |
| 6 | Kanal |
| 6a | Kanalanteil |
| 6b | Kanalanteil |
| 7 | dritte Luftverbindung, im Kanal verlaufend |
| 8 | Bypassleitung |
| 8a | Austrittsöffnung |
| 8b | Eintrittsöffnung |
| 9 | Entlüftungsleitung |
| 9a | Austrittsöffnung |
| 10 | Zuluft (Pfeil) |
| 11 | Entlüftung (Pfeil) |
| 12 | Hohlraum des Außenzylinders |
| 12a | Teil des Hohlraums des Außenzylinders |
| 12b | Teil des Hohlraums des Außenzylinders |
| 12c | Teil des Hohlraums des Außenzylinders |
| 12d | Teil des Hohlraums des Außenzylinders |
| A1 | Luftversorgungsanschluss |
| A2 | Luftversorgungsanschluss |
| B1 | mit Luftdruck beaufschlagte Komponente |
| B2 | mit Luftdruck beaufschlagte Komponente |
| C1 | Endseite des Außenzylinders |
| C2 | Endseite des Außenzylinders |
| D1 | Durchmesser des Kolbens |
| D2 | Durchmesser des Kolbens |
| E1 | Ende des Kolbens |
| E2 | Ende des Kolbens |
| f1 | Druckfeder |
| f2 | Druckfeder |
| F1 | Vorspannkraft |
| F2 | Vorspannkraft |
| G1 | Stellung des Kolbens |
| G2 | Stellung des Kolbens |
| I1 | Innenstirnfläche des Außenzylinders |
| I2 | Innenstirnfläche des Außenzylinders |
| K1 | Kammer |
| K2 | Kammer |
| N | Neutrale Stellung |
| n | Proportionalitätsfaktor |
| P1 | Luftdruck |
| P2 | Luftdruck |

**Patentansprüche**

1. Druckminderer (1), umfassend einen Außenzylinder (2) mit einem ersten Luftversorgungsanschluss (A1) an einer ersten Endseite (C1) des Außenzylinders (2) und einem zweiten Luftversorgungsanschluss (A2) an einer zweiten Endseite (C2) des Außenzylinders (2), und einen im Außenzylinder (2) beweglich führbaren Kolben (3) mit einer ersten endseitigen Stirnfläche (S1) und einer zweiten endseitigen Stirnfläche (S2), wobei zwischen dem ersten Luftversorgungsanschluss (A1) des Außenzylinders (2) und der ersten Stirnfläche (S1) des Kolbens (3) eine erste Luftkammer (K1) und zwischen dem zweiten Luftversorgungsanschluss (A2) des Außenzylinders (2) und der zweiten Stirnfläche (S2) des Kolbens (3) eine zweite Luftkammer (K2) angeordnet ist,

**dadurch gekennzeichnet, dass**

die Flächeninhalte der beiden Stirnflächen (S1, S2) des Kolbens (3) unterschiedlich groß sind, und wobei der Druckminderer (1) geeignet ist, einen in der zweiten Luftkammer (K2) herrschenden zweiten Luftdruck (P2) proportional zu einem in der ersten Luftkammer (K1) herrschenden ersten Luftdruck (P1) impulsweise zu mindern, indem zeitweise bei einer ersten Stellung (G1) des Kolbens (3) gegenüber dem Außenzylinder (2) eine aus einem ersten Teil (4a), ausgebildet als ein Kanal (6) des Kolbens (3), und einem zweiten Teil (4b), ausgebildet als eine Bypassleitung (8), bestehende erste Luftverbindung (4) zwischen der ersten Luftkammer (K1) und der zweiten Luftkammer (K2) ausgebildet ist.

2. Druckminderer (1) nach Anspruch 1,
**dadurch gekennzeichnet, dass**
zeitweise bei einer zweiten Stellung (G2) des Kolbens (3) gegenüber dem Außenzylinder (2) eine aus zwei Teilen (5a, 5b) bestehende zweite Luftverbindung (5) ausgebildet ist, mittels der Luft aus der zweiten Luftkammer (K2) an die Umgebung (U) abführbar ist.

3. Druckminderer (1) nach Anspruch 1 oder 2,
**dadurch gekennzeichnet, dass**
ein aus zwei miteinander in Verbindung stehenden Teilen (6a, 6b) bestehender, innerhalb des Kolbens (3) verlaufender Kanal (6) geeignet ist, in der ersten Stellung (G1) des Kolbens (3) den ersten Teil (4a) der ersten Luftverbindung (4) auszubilden und in der zweiten Stellung (G2) des Kolbens (3) den ersten Teil (5a) der zweiten Luftverbindung (5) auszubilden.

4. Druckminderer (1) nach einem der vorangehenden Ansprüche,
**dadurch gekennzeichnet, dass**
der zweite Teil (5b) der zweiten Luftverbindung (5) durch eine aus dem Außenzylinder (2) herausführende Entlüftungsleitung (9) ausgebildet wird.

5. Druckminderer (1) nach einem der vorangehenden Ansprüche,
**dadurch gekennzeichnet, dass**
zwischen dem ersten Luftversorgungsanschluss (A1) des Außenzylinders (2) und der ersten Stirnfläche (S1) des Kolbens (3) eine erste mechanische Druckfeder (f1) mit einer ersten Federvorspannkraft (F1) und zwischen dem zweiten Luftversorgungsanschluss (A2) des Außenzylinders (2) und der zweiten Stirnfläche (S2) des Kolbens (3) eine zweite mechanische Druckfeder (f2) mit einer zweiten Federvorspannkraft (F2) angeordnet ist.

6. Druckminderer (1) nach einem der vorangehenden Ansprüche,
**dadurch gekennzeichnet, dass**
das Verhältnis des Flächeninhalts der zweiten Stirnfläche (S2) des Kolbens (3) zum Flächeninhalt der ersten Stirnfläche (S1) des Kolbens (3) einem Wert aus einem Bereich von 1,2 bis 20, bevorzugt 2, entspricht.

7. Druckminderer (1) nach einem der vorangehenden Ansprüche,
**dadurch gekennzeichnet, dass**
der Druckminderer (1) zwischen einer dem ersten Luftversorgungsanschluss (A1) zugeordneten ersten Komponente (B1) und einer dem zweiten Luftversorgungsanschluss (A2) zugeordneten zweiten Komponente (B2) anordenbar ist.

8. Druckminderer (1) nach Anspruch 7,
**dadurch gekennzeichnet, dass**
die erste Komponente (B1) eine Vorrichtung in einem Fahrzeugsitz, insbesondere eine Niveausteuerung oder eine Vertikalfeder, und die zweite Komponente (B2) eine Horizontalfederung, ein Dämpfer, ein Hydrospeicher, eine Sitzpolster-Konturanpassung oder ein Lendenwirbelmassagesystem des Fahrzeugsitzes ist.

9. Druckminderer (1) nach Anspruch 3,
**dadurch gekennzeichnet, dass**
die Teile (6a, 6b) des Kanals (6) zylinderförmig sind, wobei die Mittelachse des ersten Teils (6a) fluchtend zur Mittelachse des Kolbens (3) angeordnet ist und die Mittelachse des zweiten Teils (6b) senkrecht zur Mittelachse des ersten Teils (6a) verlaufend angeordnet ist, wobei der zweite Teil (6b) durch den Kolben (3) durchgehend verlaufend angeordnet ist.

## Claims

1. Pressure reducer (1), comprising an outer cylinder (2) with a first air supply connector (A1) on a first end side (C1) of the outer cylinder (2) and a second air supply connector (A2) on a second end side (C2) of the outer cylinder (2), and a piston (3) which can be guided movably in the outer cylinder (2) with a first end-side front surface (S1) and a second end-side front surface (S2), wherein a first air chamber (K1) is arranged between the first air supply connector (A1) of the outer cylinder (2) and the first front surface (S1) of the piston (3) and a second air chamber (K2) is arranged between the second air supply connector (A2) of the outer cylinder (2) and the second end-side front surface (S2) of the piston (3),
**characterized in that**
the surface areas of the two front surfaces (S1, S2) of the piston (3) are of different size, and wherein the pressure reducer (1) is suitable for reducing a second air pressure (P2) which prevails in the second air chamber (K2) in a pulsed manner proportionally to a first air pressure (P1) which prevails in the first air chamber (K1) by a first air connection (4), which consists of a first part (4a), formed as a channel (6) of the piston (3), and a second part (4b), formed as a bypass line (8), between the first air chamber (K1) and the second air chamber (K2) temporarily in a first position (G1) of the piston (3) with respect to the outer cylinder (2).

2. Pressure reducer (1) according to claim 1,
**characterised in that**
when the piston (3) is in a second position (G2) relative to the outer cylinder (2), a second air connection (5) consisting of two parts (5a, 5b) is formed temporarily, by means of which air can be removed from the second air chamber (K2) to the surroundings (U).

3. Pressure reducer (1) according to claim 1 or claim 2,
**characterised in that**
a channel (6) which consists of two interconnected parts (6a, 6b) and extends inside the piston (3) is suitable for forming the first part (4a) of the first air connection (4) in the first position (G1) of the piston (3) and is suitable for forming the first part (5a) of the second air connection (5) in the second position (G2) of the piston (3).

4. Pressure reducer (1) according to any of the preceding claims,
**characterised in that**
the second part (5b) of the second air connection (5) is formed by a vent line (9) which leads out of the outer cylinder (2).

5. Pressure reducer (1) according to any of the preceding claims,
**characterised in that**
a first mechanical compression spring (f1) having a first spring preloading force (F1) is arranged between the first air supply connector (A1) of the outer cylinder (2) and the first front surface (S1) of the piston (3) and a second mechanical compression spring (f2) having a second spring preloading force (F2) is arranged between the second air supply connector (A2) of the outer cylinder (2) and the second front surface (S2) of the piston (3).

6. Pressure reducer (1) according to any of the preceding claims,
**characterised in that**
the ratio of the surface area of the second front surface (S2) of the piston (3) to the surface area of the first front surface (S1) of the piston (3) corresponds to a value in a range of from 1.2 to 20, preferably 2.

7. Pressure reducer (1) according to any of the preceding claims,
**characterised in that**
the pressure reducer (1) can be arranged between a first component (B1) associated with the first air supply connector (A1) and a second component (B2) associated with the second air supply connector (A2).

8. Pressure reducer (1) according to claim 7,
**characterised in that**
the first component (B1) is a device in a vehicle seat, in particular a level control or a vertical spring, and the second component (B2) is a horizontal suspension, a damper, a hydraulic accumulator, a seat cushion contour adaptation or a lumbar massage system of the vehicle seat.

9.  Pressure reducer (1) according to claim 3,
    **characterised in that**
    the parts (6a, 6b) of the channel (6) are cylindrical, the centre axis of the first part (6a) being arranged so as to align with the centre axis of the piston (3) and the centre axis of the second part (6b) being arranged so as to extend perpendicularly to the centre axis of the first part (6a), the second part (6b) being arranged so as to pass continuously through the piston (3).

## Revendications

1.  Réducteur de pression (1) comportant un cylindre extérieur (2) muni d'un premier raccordement (A1) d'alimentation en air sur un premier côté d'extrémité (C1) du cylindre extérieur (2) et un second raccordement (A2) d'alimentation en air sur un second côté d'extrémité (C2) du cylindre extérieur (2), et un piston (3) pouvant être guidé en déplacement dans le cylindre extérieur (2) et présentant une première surface frontale (S1) côté extrémité et une seconde surface frontale (S2) côté extrémité, dans lequel une première chambre à air (K1) est agencée entre le premier raccordement (A1) d'alimentation en air du cylindre extérieur (2) et la première surface frontale (S1) du piston (3) et une seconde chambre à air (K2) est agencée entre le second raccordement (A2) d'alimentation en air du cylindre extérieur (2) et la seconde surface frontale (S2) du piston (3),
    **caractérisé par le fait que**
    les superficies des deux surfaces frontales (S1, S2) du piston (3) présentent une dimension différente, et dans lequel le réducteur de pression (1) est approprié pour réduire par impulsions une seconde pression d'air (P2) régnant dans la seconde chambre à air (K2) proportionnellement à une première pression d'air (P1) régnant dans la première chambre à air (K1), en ce qu'une première communication d'air (4) composée d'une première partie (4a), formée en tant qu'un canal (6) du piston (3), et une seconde partie (4b), formée en tant qu'une conduite de dérivation (8), est temporairement formée entre la première chambre à air (K1) et la seconde chambre à air (K2), lorsque le piston (3) est dans une première position (G1) par rapport au cylindre extérieur (2).

2.  Réducteur de pression (1) selon la revendication 1,
    **caractérisé par le fait que**
    temporairement lorsque le piston (3) est dans une seconde position (G2) par rapport au cylindre extérieur (2), une seconde communication d'air (5) composée de deux parties (5a, 5b) est formée, au moyen de laquelle de l'air peut être retiré de la seconde chambre à air (K2) vers l'environnement (U).

3.  Réducteur de pression (1) selon l'une des revendications 1 ou 2,
    **caractérisé par le fait que**
    un canal (6) constitué de deux parties (6a, 6b) en liaison l'une avec l'autre, s'étendant à l'intérieur du piston (3), est approprié pour former la première partie (4a) de la première communication d'air (4) dans la première position (G1) du piston (3) et est approprié pour former la première partie (5a) de la seconde communication d'air (5) dans la seconde position (G2) du piston (3).

4.  Réducteur de pression (1) selon l'une des revendications précédentes,
    **caractérisé par le fait que**
    la seconde partie (5b) de la seconde communication d'air (5) est formée par une conduite de ventilation (9) qui conduit hors du cylindre extérieur (2).

5.  Réducteur de pression (1) selon l'une des revendications précédentes,
    **caractérisé par le fait que**
    entre le premier raccordement (A1) d'alimentation en air du cylindre extérieur (2) et la première surface frontale (S1) du piston (3), est disposé un premier ressort de compression mécanique (F1) ayant une première force de précontrainte élastique (F1), et entre le second raccordement (A2) d'alimentation en air du cylindre extérieur (2) et la seconde surface frontale (S2) du piston (3), est disposé un second ressort de compression mécanique (S2) ayant une seconde force de précontrainte élastique (F2).

6.  Réducteur de pression (1) selon l'une des revendications précédentes,
    **caractérisé par le fait que**
    le rapport de la superficie de la seconde surface frontale (S2) du piston (3) à la superficie de la première surface frontale (S1) du piston (3) correspond à une valeur se situant dans une plage de 1,2 à 20, de préférence 2.

7. Réducteur de pression (1) selon l'une des revendications précédentes,
**caractérisé par le fait que**
le réducteur de pression (1) est apte à être disposé entre un premier composant (B1) associé au premier raccordement (A1) d'alimentation en air et un second composant (B2) associé au second raccordement (A2) d'alimentation en air.

8. Réducteur de pression (1) selon la revendication 7,
**caractérisé par le fait que**
le premier composant (B1) est un dispositif dans un siège de véhicule, en particulier un dispositif de commande de niveau ou un ressort vertical, et le second composant (B2) est une suspension horizontale, un amortisseur, un accumulateur hydraulique, une adaptation de contour de coussin de siège ou un système de massage des vertèbres lombaires du siège de véhicule.

9. Réducteur de pression (1) selon la revendication 3,
**caractérisé par le fait que**
les parties (6a, 6b) du canal (6) sont cylindriques, l'axe central de la première partie (6a) étant disposé en alignement par rapport à l'axe central du piston (3) et l'axe central de la seconde partie (6b) étant disposé s'étendant perpendiculairement à l'axe central de la première partie (6a), la seconde partie (6b) étant disposée de façon à traverser en continu le piston (3).

Fig. 1

Fig. 2

Fig. 3

B2

B2

B2

B2

B2

B2

B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0109220 A1

- US 4770094 A